# FASCICULE DE BREVET EUROPEEN

(11) **EP 4 069 536 B1**
(45) Date de publication et mention de la délivrance du brevet: **04.06.2025**
(21) Numéro de dépôt: 20812089.9
(22) Date de dépôt: 01.12.2020
(51) Int. Cl.: B60J 10/75, B60J 10/265, B60R 13/04, B60K 35/00

(54) **ELEMENT D'ENCADREMENT DE VITRE POUR UN VEHICULE AUTOMOBILE**
FENSTERRAHMENELEMENT FÜR EIN KRAFTFAHRZEUG
WINDOW FRAME ELEMENT FOR A MOTOR VEHICLE

(30) Priorité: 02.12.2019 FR 1913619; 02.12.2019 FR 1913621
(43) Date de publication de la demande: 12.10.2022
(73) Titulaire: HUTCHINSON, 75008 Paris (FR)
(72) Inventeur: FLORENTZ, Bertrand, 45200 PAUCOURT (FR); POPINEAU, Sébastien, 77760 LA CHAPELLE LA REINE (FR); BLANCHARD GOMES, David, 92300 LEVALLOIS PERRET (FR)
(74) Mandataire: Gevers & Orès
(86) Numéro de dépôt international: PCT/EP2020/084024
(87) Numéro de publication internationale: WO 2021/110629

(56) Documents cités:
- EP-A1- 2 363 324
- EP-B1- 2 363 324
- FR-A1- 3 066 158
- JP-A- 2014 201 968
- US-A1- 2010 238 006
- US-A1- 2019 111 856

## Description

### Domaine technique de l'invention

La présente invention concerne notamment un élément d'encadrement de vitre pour un véhicule, en particulier automobile.

### Arrière-plan technique

Un véhicule automobile comprend plusieurs vitres qui sont encadrées ou entourées par des éléments en particulier pour assurer une étanchéité autour de la vitre et également pour surligner les vitrages en leur donnant un aspect plus luxueux avec des enjoliveurs, par exemple typiquement chromés, brossés ou noir brillants. Un exemple d'un tel élément d'encadrement est un lécheur latéral d'une vitre qui est un élément d'encadrement de forme allongée qui s'étend le long d'un bord d'une vitre, en général mobile, et qui peut assurer à la fois une étanchéité avec cette vitre, son léchage pour nettoyer celle-ci lors de sa descente et sa remontée (d'où son nom), ainsi qu'une finition esthétique. L'élément d'encadrement peut également s'étendre le long d'un bord de vitre avant (pare-brise) ou arrière (lunette arrière), et/ou ne pas être en contact directement avec le vitrage comme dans le cas d'un enjoliveur de grille d'auvent situé en regard du bas du pare-brise.

De manière classique, un élément d'encadrement comprend un corps au moins en partie élastiquement déformable et configuré pour être porté par un support du véhicule et pour coopérer à étanchéité avec un organe, tel qu'une vitre. Dans le cas d'un lécheur, le corps élastique est par exemple fixé sur un bâti d'une porte du véhicule et coopère à étanchéité avec la vitre mobile ou fixe de cette porte.

Un véhicule automobile est équipé de plusieurs dispositifs d'affichage d'information à destination de l'utilisateur du véhicule. Ces dispositifs sont en général situés à l'intérieur de l'habitable du véhicule.

Il a déjà été proposé d'afficher des informations à l'extérieur du véhicule, par exemple sur une vitre du véhicule. Cependant, ces technologies sont relativement complexes et coûteuses à mettre en œuvre. Les documents US 2010/238006 A1, EP 2 363 324 A1, JP 2014 201968 A et US 2019/111856 A1 divulguent des systèmes permettant d'afficher des informations à l'extérieur d'un véhicule.

Il a également été proposé d'équiper des éléments d'encadrement du type précité avec des dispositifs lumineux. Cependant, ces technologies ne permettent pas d'afficher des informations précises et variées, en particulier car les dispositifs lumineux utilisés se limitent à l'affichage d'un spot lumineux ayant une couleur et/ou une forme spécifique.

De plus, l'esthétique de ces solutions est également très discutable, car elle ne s'intègre pas de façon harmonieuse avec les organes voisins, tels que la vitre ou le caisson de porte.

L'invention permet de remédier à au moins une partie des problèmes évoqués ci-dessus, grâce à une solution qui est simple, efficace et économique et qui allie l'esthétique et l'affichage d'informations.

### Résumé de l'invention

La présente invention concerne un élément d'encadrement de vitre pour un véhicule, en particulier automobile, cet élément étant tel que défini à la revendication 1.

L'invention propose ainsi d'associer un écran d'affichage à un élément d'encadrement de vitre qui prolonge virtuellement et visuellement la vitre par exemple vers le bas par une surface brillante d'apparence noire quand il est éteint et qui peut agrandir virtuellement les vitrages et permet de changer la forme apparente des vitrages du véhicule. C'est donc également un nouvel élément de style permettant un modelage du design véhicule que les vitres seules ne permettent pas du fait que leur taille verticale et leur forme sont contraintes de descendre et de s'effacer préférentiellement entièrement dans le caisson de porte une fois qu'elles sont ouvertes.

Cet écran est configuré pour afficher des informations et n'est donc pas une simple surface sur laquelle sont projetées des informations. L'écran permet d'agrandir virtuellement la surface de vitrage en le prolongeant par exemple vers le bas, et donc d'améliorer l'esthétique (« design ») tout en fournissant des informations à l'usager. L'écran en question est du type à pixels, c'est-à-dire qu'il ne s'agit pas d'un simple spot lumineux ni de plusieurs spots lumineux.

Dans la présente demande, on entend par « pixel », une unité de base permettant de mesurer la définition d'une image numérique matricielle, c'est-à-dire organisée en colonnes et rangées. On comprend ainsi que l'écran d'affichage comprend une matrice de pixels dont la définition est choisie en fonction des informations à afficher.

L'invention permet de combiner plusieurs fonctions dans un même endroit et une même pièce d'un véhicule, à savoir l'élément d'encadrement. La première fonction est la fonction d'affichage d'information grâce à l'écran, cette solution étant simple, efficace et esthétique et moins coûteuse que d'autres solutions d'affichage d'informations. Une autre fonction est liée à l'amélioration de l'esthétique de la vitre et donc du véhicule. L'élément d'encadrement est connu pour améliorer la finition autour d'une vitre et peut par exemple être utilisé pour donner une impression d'agrandissement de la surface vitrée.

L'orientation horizontale en condition d'utilisation de l'élément d'encadrement peut permettre de faciliter l'affichage de certaines informations vers l'extérieur du véhicule, à destination d'un usager, telles que par exemple des messages lisibles à une distance de plusieurs mètres de la voiture.

L'élément d'encadrement selon l'invention peut comprendre une ou plusieurs des caractéristiques suivantes, prises isolément les unes des autres ou en combinaison les unes avec les autres :
- ledit corps a une forme allongée ;
- ledit au moins un écran est situé sur ledit corps ;
- l'élément d'encadrement comporte un enjoliveur de finition d'une vitre latérale, du pare-brise ou d'une vitre arrière d'un véhicule ;
- l'élément d'encadrement comporte un joint ou un lécheur extérieur d'une vitre latérale du pare-brise ou d'une vitre arrière d'un véhicule ;
- l'élément d'encadrement comprend en outre un système de commande et de communication, qui est configuré pour recevoir des premiers signaux et pour transmettre des seconds signaux audit au moins un écran, qui est configuré pour afficher des informations en fonction desdits seconds signaux ;
- ledit système est configuré pour communiquer par liaison filaire avec au moins un élément destiné à être situé à l'intérieur ou à l'extérieur du véhicule ;
- ledit système est configuré pour communiquer avec au moins un dispositif choisi parmi un téléphone portable ou une application installée sur un téléphone portable, un capteur, un actionneur, une clef, un bus de données du véhicule (par exemple CAN, MOST, LIN, FLEXRAY, ETHERNET), un réseau de communication mobile, WIFI, Bluetooth, local ou relié à l'internet, un objet communicant en champ proche (NFC), etc. ;
- ledit capteur est un capteur de verrouillage/déverrouillage de porte, un capteur d'ouverture/fermeture de porte, un capteur d'ouverture/fermeture de vitre, un capteur de température, un capteur de bruit ou de voix, un capteur d'image ou de vidéo, un capteur de position géographique, un capteur de proximité, un radar, un lidar, un capteur d'empreinte digitale, un capteur solaire ou un matériau thermoélectrique par exemple noir permettant de générer du courant, etc. ;
- ledit actionneur est un actionneur permettant l'ouverture/la fermeture ou le verrouillage/déverrouillage d'une vitre, d'une porte ou de portes, l'apparition d'une poignée de porte, un haut-parleur ou un actionneur électrodynamique ou piézoélectrique permettant de sonoriser la surface de cet encadrement pour diffuser des sons, des avertissements, de la musique ou des messages parlés, etc. ;
- l'élément d'encadrement est ou comprend un lécheur extérieur ou un enjoliveur de finition d'une vitre latérale d'un véhicule, et par exemple d'une vitre latérale d'une porte latérale d'un véhicule ; l'enjoliveur peut être chromé, coloré, décoré, configuré pour surligner le tour d'une vitre, constitué d'un bandeau lumineux émis par l'écran, etc. ;
- l'élément d'encadrement est un enjoliveur de finition par exemple assorti aux encadrements des autres vitres ;
- ledit au moins un écran est au moins en partie tactile et/ou ledit élément d'encadrement comprend au moins une surface tactile ou une interface haptique, radar ou vidéo, reconnaissant et interprétant des gestes à distance, telle qu'un clavier de saisie d'information par exemple ;
- ledit au moins écran est configuré pour afficher une information choisie parmi une indication d'ouverture et/ou de fermeture de porte du véhicule, un indicateur d'un niveau de charge d'une batterie en particulier du véhicule, une pression de pneumatique(s) du véhicule, un numéro d'immatriculation en particulier du véhicule, un message et/ou une image que l'utilisateur aura choisi d'afficher sur ledit écran à partir d'un dispositif électronique qui y serait connecté en particulier son téléphone portable ou smartphone ou réseau de ressources informatiques de type mobile ou *Cloud,* une information relative à la qualité de l'air intérieur du véhicule ou de l'air extérieur, un SMS de communication, une information sous forme de texte ou de code couleur représentant des émissions de polluants, des recommandations ou des rejets de gaz du véhicule, une information sur une action d'entretien préventif ou urgente à réaliser sur le véhicule (pneus dégonflés, niveau d'huile à refaire, usure des plaquettes/disques de frein, visite de contrôle technique à faire sur parking, à programmer ou programmée à une date particulière), une information sur l'état de la carrosserie du véhicule dans le cadre d'une location du véhicule, l'accessibilité du véhicule à des personnes à mobilité réduite, une information sur une distance entre ledit véhicule et les véhicules stationnés de chaque côté dudit véhicule, notamment pour les PMR nécessitant de l'espace, une information réglementaire résultant d'un péage, ou d'un droit d'accès ou d'une activation par les forces de l'ordre, un décompte du temps de stationnement restant en particulier dans le cadre du paiement de ce stationnement, une information codée (QR Code, message crypté, mot de passe) permettant d'autoriser l'accès à certaines zones par une interrogation ou validation visuelle d'un dispositif extérieur, une couleur, un signe ou un logo dont la reconnaissance déclenche la validation d'un contrôle d'accès (places réservées à des catégories d'utilisateurs, PMR, famille, catégorie de pollution du véhicule, caractère zéro émission du véhicule en déplacement, etc.), dans le cadre d'une voiture de location : un numéro de réservation, un nombre de kilomètres parcourus pendant le contrat, un nombre de kilomètres autorisés, une date et une heure de restitution du véhicule, etc. ;
- ledit au moins écran a une surface d'affichage supérieure à 1cm², et de préférence supérieure à 10cm², et/ou une résolution ou définition supérieure ou égale à 50 ppp (points par pouce) ;
- ledit au moins un écran s'étend sur toute la longueur de la vitre pour la prolonger virtuellement vers le bas et permettre d'autres formes (virtuelles) de découpe des bas de vitres ;
- le support du véhicule longe les vitrages du véhicule et en particulier ladite vitre ;
- l'élément d'encadrement comprend plusieurs écrans d'affichage d'informations différentes ;
- ledit corps et ledit au moins un écran sont recouverts d'une couche au moins en partie transparente pour visualiser l'information affichée à travers cette couche ayant de préférence un aspect noir brillant quand l'écran est éteint ;
- ladite couche comprend une partie opaque, par exemple noire ou blanche, recouvrant ledit corps et une partie transparente ou semi transparente recouvrant ledit au moins un écran ; cette partie transparente ou semi transparente est par exemple teintée en gris pour donner un aspect continu et uniforme noir brillant quand l'écran est éteint,
- ladite couche comprend une face située du côté dudit au moins un écran, qui comprend au moins une zone comportant un revêtement, de préférence noir, pour former ladite au moins une partie opaque, de préférence brillante, et au moins une zone ne comportant pas un tel revêtement, pour former ladite partie transparente et pouvant, par sa transparence et sa coloration propre associée à un écran noir placé derrière cette surface, donner le même aspect de préférence noir brillant que la zone opaque ; le revêtement peut être noir et brillant et/ou profond ; le revêtement peut être obtenu par sérigraphie ou peinture par exemple noire au dos; le revêtement permet de modifier l'apparence de la vitre en l'agrandissant ou leur donnant une forme nouvelle et plus variée non réalisable avec une vitre traditionnelle dont la hauteur doit disparaître dans la porte lorsqu'elle est ouverte avec donc une certaine cylindricité et planéité ; l'élément d'encadrement agrandit visuellement la vitre par exemple par le bas, ou permet de lui donner des formes et galbes impossibles sans obérer son ouverture totale ; l'implantation d'un écran, rendu quasi invisible, dans cette zone permet donc de résoudre également une problématique de style qui n'avait pas de solution jusque-là ;
- ladite couche est au moins en partie tactile ;
- l'enjoliveur définit une surface extérieure esthétique et visible par un utilisateur dudit véhicule, cet enjoliveur pouvant être constitué d'un bandeau lumineux émis par l'écran ; dans ce dernier cas, l'enjoliveur n'est pas matériel mais est virtuel ;
   l'élément d'encadrement a une forme générale allongée ;
- ledit au moins un écran a une surface d'affichage représentant plus de 50%, et de préférence plus de 80% de la surface visible de l'élément d'encadrement ;
- ledit au moins un écran est du type à OLED, DEL/LED, LCD, TFT-LCD plasma, tissu ou peau, en particulier interactive ;
- ledit élément d'encadrement est dépourvu de vitre ou panneau en verre ;
- ledit élément d'encadrement comprend au moins une caméra ; cette caméra est avantageusement configurée pour filmer vers l'avant, l'arrière, le bas et/ou un côté du véhicule ;
- ledit élément d'encadrement comprend au moins un projecteur, comme par exemple une tête laser ou un spot LED, potentiellement orientable, configuré pour projeter des informations sur un organe du véhicule, par exemple vers le haut sur une vitre ou vers le bas sur un caisson ou sur le sol ;
- ledit élément d'encadrement comprend au moins un radar, et/ou au moins un haut-parleur, et/ou au moins un capteur de proximité, et/ou au moins un lidar, et/ou au moins un actionneur, et/ou au moins un capteur solaire ou thermoélectrique permettant de générer ou de récupérer de l'électricité, et/ou au moins une batterie permettant de stocker et de restituer de l'électricité ;
- le capteur peut en outre être choisi parmi : un capteur qualité de l'air (Indice AQI *Air Quality Index*)*,* un thermomètre, un capteur de luminosité pour adaptation back light, une caméra pour la reconnaissance, un accéléromètre, un microphone, un capteur de pression pour *wake up* ou *E-Call,* un détecteur de proximité pour *wake up,* un magnétomètre (boussole), un gyromètre, un hygromètre, etc.
- ledit corps est au moins en partie élastiquement déformable ou comprend une partie élastiquement déformable, et est configuré pour coopérer à étanchéité avec un organe, tel qu'une vitre ;
- l'élément d'encadrement comprend au moins un dispositif de désembuage, et/ou de dégivrage, et/ou de lavage, par exemple de l'écran, de la caméra, etc. ;
- ledit au moins un écran a une forme allongée et est configuré pour s'étendre sur plus de 50% d'un pourtour de la vitre ; il peut s'étendre sur l'intégralité de ce pourtour ; il peut ainsi remplacer les enjoliveurs classiquement utilisés pour améliorer l'esthétique autour d'une vitre ;
- ledit système est fixé sur ledit corps et est relié audit au moins un écran, par exemple par une liaison filaire ;
- ledit système est à distance dudit corps et est relié audit au moins un écran, par exemple par une liaison filaire ou sans fil ;
- l'élément d'encadrement comprend des moyens de fixation amovible, tels qu'au moins un crochet ou au moins une bande adhésive, sur une porte ou ouvrant du véhicule ;
- l'écran est configuré pour afficher au moins un message horizontalement, avec des caractères ayant une hauteur supérieure ou égale à 1cm, de préférence supérieure ou égale à 2cm et plus préférentiellement supérieure ou égale à 4cm ;
- la partie d'adaptation a une forme de cadre et comprend un bord supérieur qui s'étend sur au moins un côté au-delà dudit cadre ; et
- le corps comprend un logement étanche de montage dudit écran voire également dudit système.

La présente invention concerne également un véhicule, en particulier automobile, comportant au moins un élément d'encadrement tel que décrit ci-dessus, cet élément d'encadrement étant situé à l'extérieur du véhicule.

Le véhicule selon l'invention peut comprendre une ou plusieurs des caractéristiques suivantes, prises isolément les unes des autres ou en combinaison les unes avec les autres :
- l'élément d'encadrement s'étend sur plus de 80% de la longueur dudit bord de la vitre, et de préférence sur toute la longueur de ce bord ;
- ledit au moins un écran s'étend sur plus de 50% voire 70% de la longueur dudit bord de la vitre, et de préférence sur toute la longueur de ce bord ;
- le véhicule comporte au moins deux éléments d'encadrement tels que décrits ci-dessus, qui s'étendent l'un derrière l'autre le long d'un côté du véhicule et respectivement le long des bords de deux vitres adjacentes ;
- ledit au moins un élément d'encadrement est situé sur un côté, à l'arrière ou à l'avant du véhicule.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une vue schématique de côté d'un véhicule automobile équipé de plusieurs éléments d'encadrement de vitre selon un mode de réalisation de l'invention ;
[Fig. 2] la figure 2 est une vue à plus grande échelle d'une partie de la figure 1 ;
[Fig. 3] la figure 3 est une vue très schématique d'un élément d'encadrement selon l'invention et de quelques-uns de ces composants ;
[Fig. 4] la figure 4 est une vue schématique en coupe transversales d'un mode de réalisation d'un élément d'encadrement selon l'invention ;
[Fig. 5] la figure 5 est une vue schématique de côté d'un véhicule automobile équipé d'un élément d'encadrement de vitre selon une variante de réalisation de l'invention ;
[Fig. 6] la figure 6 est une vue schématique en perspective de l'élément d'encadrement de vitre de la figure 5, et plus particulièrement de sa face visible ;
[Fig. 7] la figure 7 est une vue schématique en perspective de l'élément d'encadrement de vitre de la figure 5, et plus particulièrement de sa face de fixation ;
[Fig. 8] la figure 8 est une vue schématique en perspective éclatée d'un élément d'encadrement tel que celui de la figure 5 ;
[Fig. 9] la figure 9 est une vue schématique en coupe transversale de l'élément d'encadrement ;
[Fig. 10] la figure 10 est une vue schématique en coupe transversale d'une porte de véhicule, et représente l'environnement de montage d'un élément d'encadrement selon l'invention ; et
[Fig. 11] la figure 11 est une vue schématique en coupe transversale de la porte de la figure 10 équipée de l'élément d'encadrement des figures 6 à 9.

### Description détaillée de l'invention

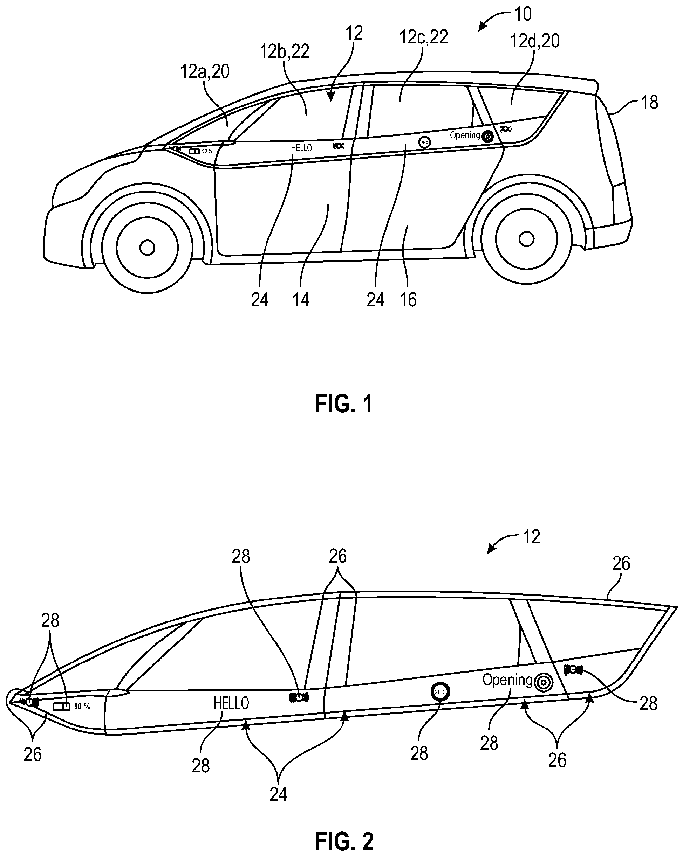

On se réfère d'abord à la figure 1 qui illustre un véhicule automobile 10. L'invention n'est toutefois pas limitée à une automobile et peut s'appliquer à d'autres types de véhicule, par exemple un camion, un train, un métro, etc. Dans la description qui suit, les expressions « extérieur(e) » et « intérieur(e) » font référence respectivement à l'extérieur et à l'intérieur du véhicule. Dans le cas où un élément est situé à l'intérieur du véhicule ou orienté vers l'intérieur du véhicule, cet élément est situé dans l'habitacle ou du côté de l'habitacle du véhicule. A contrario, dans le cas où un élément est situé à l'extérieur du véhicule ou orienté vers l'extérieur du véhicule, cet élément est situé à l'extérieur de l'habitacle ou du côté opposé à l'habitacle du véhicule. Lorsqu'un élément est présent à côté d'une vitre du véhicule, on peut considérer que cet élément est situé à l'extérieur du véhicule ou du côté extérieur du véhicule lorsque le plan dans lequel la vitre s'étend sépare cet élément de l'habitable du véhicule. On peut alors considérer qu'un élément situé à l'intérieur du véhicule ou du côté intérieur du véhicule, est situé avec l'habitable d'un même côté que le plan de la vitre.

Le véhicule 10 comprend plusieurs caractéristiques qui sont bien connues et qui ne seront donc pas décrites.

Dans l'exemple représenté, le véhicule 10 comprend plusieurs surfaces vitrées dont une avant, une arrière, et deux latérales. La figure 1 montre une des surfaces vitrées latérales 12 du véhicule.

Le véhicule comprend ici cinq portes, c'est-à-dire quatre portes latérales, à savoir deux portes avant 14 et deux portes arrière 16, et une porte de coffre 18. La figure 1 permet de visualiser une porte avant 14 et une porte arrière 16. La surface vitrée 12 s'étend sur une majeure partie de la longueur du véhicule 10 et comprend plusieurs parties 12a, 12b, 12c, 12d distinctes et adjacentes. La partie avant 12a comprend une vitre fixe 20. La partie arrière 12d comprend également une vitre fixe 20. Les parties intermédiaires 12b, 12c comprennent des vitres mobiles 22 qui sont portées respectivement par les portes avant 14 et arrière 16.

Chacune des vitres 20, 22 est entourée par un cadre qui peut s'étendre sur tout ou partie du contour de cette vitre. Dans la présente demande, on entend par élément d'encadrement de vitre, un élément faisant partie d'un cadre de vitre et destiné à s'étendre le long d'un bord de cette vitre. Un élément d'encadrement peut être accolé à une vitre ou à distance de cette vitre.

Parmi les éléments d'encadrement d'une vitre, et en particulier d'une vitre mobile 22, il y a un lécheur 24 qui est un élément d'encadrement sensiblement horizontal qui délimite une partie basse ou inférieure du cadre.

Un élément d'encadrement comporte un corps au moins en partie élastiquement déformable et configuré pour être porté par un support du véhicule et pour coopérer à étanchéité avec un organe du véhicule. Dans le cas d'un lécheur, son corps est fixé sur un bâti de la porte 14 ou 16 et coopère à étanchéité avec la vitre mobile 22 de cette porte.

En plus d'entourer au moins en partie les vitres 20, 22, les éléments d'encadrement peuvent être configurés pour entourer tout le pourtour de la surface vitrée 12. C'est-à-dire que les éléments d'encadrement sont disposés les uns à côté des autres le long de la périphérie de la surface vitrée 12.

Les éléments d'encadrement peuvent en outre comprendre des enjoliveurs 26 qui ont pour but d'améliorer le rendu esthétique de la surface vitrée 12 et donc du véhicule. Dans l'exemple représenté, une bande continue formée de plusieurs enjoliveurs successifs s'étend sur les éléments d'encadrement, sur tout le pourtour de la surface vitrée 12. Ces enjoliveurs 26 comprennent par exemple des profilés métalliques ou métallisés.

L'invention propose d'associer ou d'intégrer au moins un écran d'affichage d'information à un ou plusieurs des éléments d'encadrement d'un véhicule, comme cela est mieux visible à la figure 2.

Préférentiellement, l'écran ou les écrans sont disposés à l'extérieur du véhicule, et visibles depuis l'extérieur du véhicule.

Dans l'exemple représenté, plusieurs écrans 28 sont situés sur des éléments d'encadrement s'étendant le long de la partie basse de la surface vitrée 12, au niveau de ses différentes parties 12a, 12b, 12c, 12d.

Les écrans 28 sont ici au nombre de sept par surface vitrée 12, bien que cela ne soit pas limitatif. Chaque élément d'encadrement peut comprendre un ou plusieurs écrans 28, par exemple jusqu'à trois ou quatre écrans. Les écrans 28 sont du type à pixels, c'est-à-dire que les écrans se présentent chacun sous la forme d'une matrice d'unités de base d'affichage (pixels), cette matrice formant une image numérique.

Les écrans 28 peuvent avoir des dimensions variées et différentes les uns des autres. Ils ont par exemple chacun une surface d'affichage supérieure à 1cm², et de préférence supérieure à 10cm².

Les écrans 28 peuvent avoir des résolutions ou définitions variées et différentes les uns des autres. Ils ont par exemple chacun une définition supérieure ou égale à 50 ppp (c'est-à-dire 50 points par pouce ou 50 points lumineux sur une longueur de 2,54cm).

Les écrans 28 peuvent être à distance les uns des autres et répartis sur la longueur de l'élément d'encadrement, ou le bord de la vitre de la surface vitrée. Les informations affichées sur chaque écran peuvent être choisies parmi : une indication d'ouverture et/ou de fermeture de porte du véhicule, un indicateur d'un niveau de charge d'une batterie en particulier du véhicule, une pression de pneumatique(s) du véhicule, un numéro d'immatriculation en particulier du véhicule, un message que l'utilisateur aura choisi d'afficher sur ledit écran à partir d'un dispositif électronique qui y serait connecté en particulier son téléphone portable ou smartphone, une information relative à la qualité de l'air intérieur du véhicule ou de l'air extérieur, une information sous forme de texte ou de code couleur représentant des émissions de polluants ou des rejets de gaz du véhicule, une information sur une action d'entretien préventif ou urgente à réaliser sur le véhicule (pneus dégonflés, niveau d'huile à refaire, usure des plaquettes/disques de frein, visite de contrôle technique à programmer ou programmée à une date particulière), une information sur l'état de la carrosserie du véhicule dans le cadre d'une location du véhicule, l'accessibilité du véhicule à des personnes à mobilité réduite, une information sur une distance entre ledit véhicule et les véhicules stationnés de chaque côté dudit véhicule, une information réglementaire résultant d'une activation par les forces de l'ordre, un décompte du temps de stationnement restant en particulier dans le cadre du paiement de ce stationnement, une information codée (QR Code, message crypté, mot de passe) permettant d'autoriser l'accès à certaines zones par une validation visuelle d'un dispositif extérieur, une couleur dont la reconnaissance déclenche la validation d'un contrôle d'accès, une heure, un message, une alerte, une indication de pollution du véhicule ou de l'environnement extérieur, une indication d'état autonome ou manuel du véhicule, une indication d'un obstacle à proximité du véhicule, etc.

Les écrans 28 peuvent être du type OLED, DEL/LED, LCD, plasma, tissu, peau, en particulier interactive, etc. Ils peuvent être tactiles afin qu'un utilisateur du véhicule puisse entrer des informations ou faire une requête.

De manière générale, les écrans 26 pourraient intégrer toutes les propriétés et toutes les fonctionnalités des écrans des téléphones portables du type smartphone.

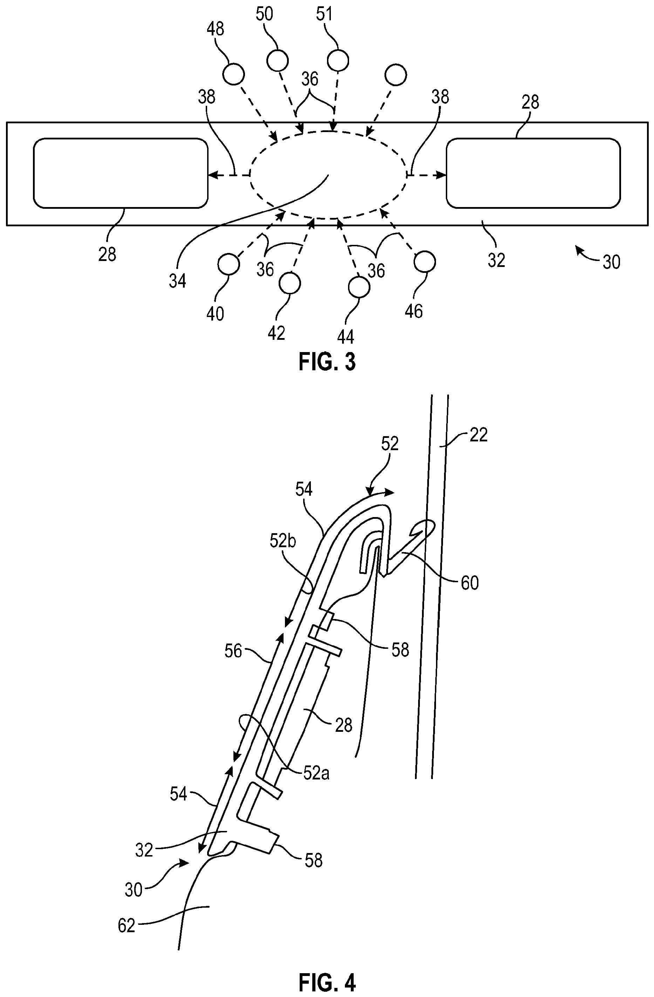

Comme cela est schématiquement représenté à la figure 3, un élément d'encadrement 30 peut comprendre un corps 32 et un ou plusieurs écrans 28 qui sont reliés à un système 34 de commande et de communication.

Le système 34 peut être situé à l'extérieur ou à l'intérieur du véhicule. Il peut donc être situé sur ou dans le corps 32 ou à distance de ce dernier.

Le système 34 est configuré pour recevoir des premiers signaux 36 et pour transmettre des seconds signaux 38 aux écrans 28 qui sont eux configurés pour afficher des informations en fonction de ces signaux 38, ou à des hauts parleurs configurés pour émettre des informations en fonction de ces signaux 38.

La communication par le système 34 est réalisée à distance, c'est à dire sans fil.

Avantageusement, le système 34 est configuré pour communiquer avec au moins un dispositif choisi parmi un téléphone portable 40 ou une application 42 installée sur un téléphone portable, un capteur 44, une clef 46, un bus 48 de données CAN du véhicule, un réseau 50 internet ou wifi, un actionneur 51, une caméra, un radar, un lidar, une cellule permettant de récupérer de l'énergie, un stockeur/émetteur d'énergie, etc.

Le capteur peut être un capteur de verrouillage/déverrouillage de porte, un capteur d'ouverture/fermeture de porte, un capteur d'ouverture/fermeture de vitre, un capteur de température, un capteur de bruit ou de voix, un capteur d'image ou de vidéo, un capteur de position géographique, un capteur de paramètre (température, pression, humidité, bruit, pollution, etc.), un capteur de déclenchement de coussin gonflable de sécurité, un capteur de proximité, un radar ou un lidar, un capteur d'empreinte digitale, un capteur de mouvement, etc. Le capteur peut être du type à ultrason, capacitif, accéléromètre, gyroscope, tactile, visuel, à fréquence radio, etc.

L'actionneur peut être un actionneur permettant l'ouverture/la fermeture d'une ou plusieurs porte(s), l'apparition d'une poignée de porte, un haut-parleur ou un actionneur électrodynamique ou piézoélectrique permettant de sonoriser la surface de cet encadrement pour diffuser des sons, des avertissements, de la musique ou des messages parlés, etc.

La cellule de récupération d'énergie est un capteur solaire ou thermoélectrique récupérant la lumière ou la chaleur,

Un stockeur/émetteur d'énergie composé d'une batterie permet de stocker et restituer de l'électricité.

La figure 4 est une vue en coupe transversale d'un élément d'encadrement 30. On constate que le corps 32 et les écrans 28 sont recouverts d'une couche 52 au moins en partie transparente pour visualiser l'information affichée par les écrans 28 à travers cette couche. La couche 52 comprend une face extérieure 52a orientée vers l'extérieur du véhicule et une face intérieure 52b située du côté du corps 32 et des écrans 28 et orientée vers l'intérieur du véhicule.

La couche 52 peut comprendre une partie opaque 54 recouvrant le corps 32 et des parties transparentes 56 ou semi transparentes recouvrant les écrans 28. La face intérieure 52b de la couche 28 peut par exemple être opacifiée par sérigraphie, le revêtement opaque de sérigraphie étant de préférence d'une couleur proche de celle du corps 32 afin d'améliorer l'esthétique de l'ensemble. Le corps 32 et la sérigraphie sont par exemple de couleur noire. La figure 4 montre en outre que le corps 32 comprend des éléments 58 d'accrochage ou de fixation sur un support 62 qui est ici un bâti ou cadre de la porte, ainsi qu'au moins une lèvre d'étanchéité 60 coopérant avec la vitre de cette porte.

L'élément d'encadrement 30 pourrait en outre lui-même comprendre au moins un capteur et par exemple un capteur d'image tel qu'un radar ou une caméra qui peut être configurée pour filmer vers l'avant, l'arrière, le bas et/ou un côté du véhicule, ou encore un capteur parmi la liste suivante :
- capteur qualité de l'air (Indice AQI *Air Quality Index*)*,*
- thermomètre,
- capteur de luminosité pour adaptation back light,
- caméra pour la reconnaissance,
- accéléromètre,
- microphone,
- capteur de pression pour *wake up* ou *E-Call,*
- détecteur de proximité pour *wake up,*
- magnétomètre (boussole),
- gyromètre,
- hygromètre,
- etc.

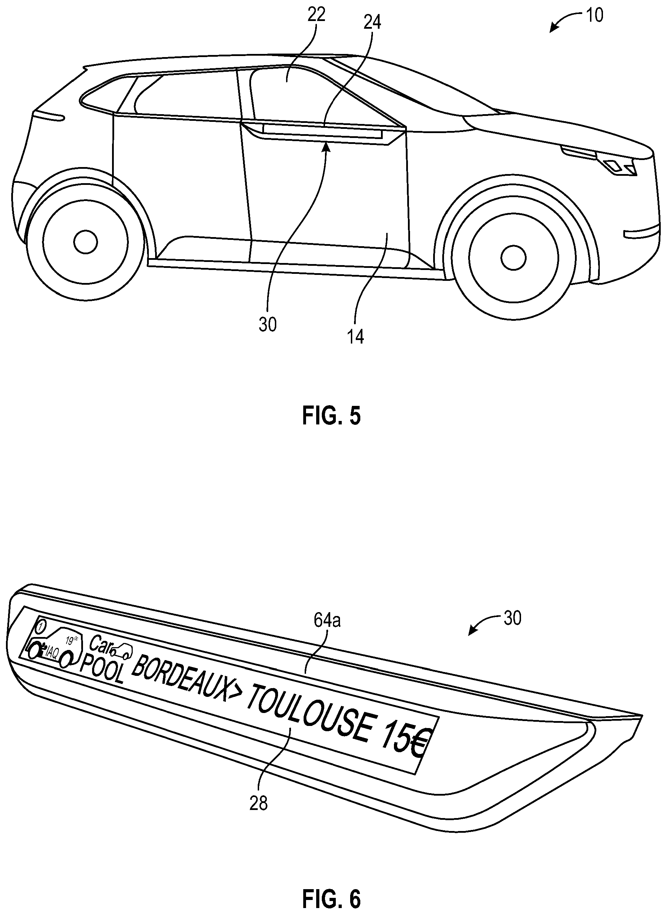

Les figures 5 à 11 illustrent une variante de réalisation de l'invention. La voiture 10 de la figure 5 est équipée d'au moins un élément d'encadrement 30 qui est ici rapporté et fixé sur une porte avant 14, à l'extérieur du véhicule 10, au niveau du lécheur 24 de la vitre mobile 22. Comme dans les précédents modes de réalisation, le montage de l'élément d'encadrement 30 n'est pas limité à son montage sur une porte avant et pourrait naturellement être monté sur une porte arrière par exemple, ou ailleurs sur le véhicule.

L'élément d'encadrement 30 s'étend sur sensiblement toute la longueur de la vitre 22 et du lécheur 24. Il peut être fixé sur la porte 14 par collage et/ou accrochage, comme cela sera décrit plus en détail dans ce qui suit.

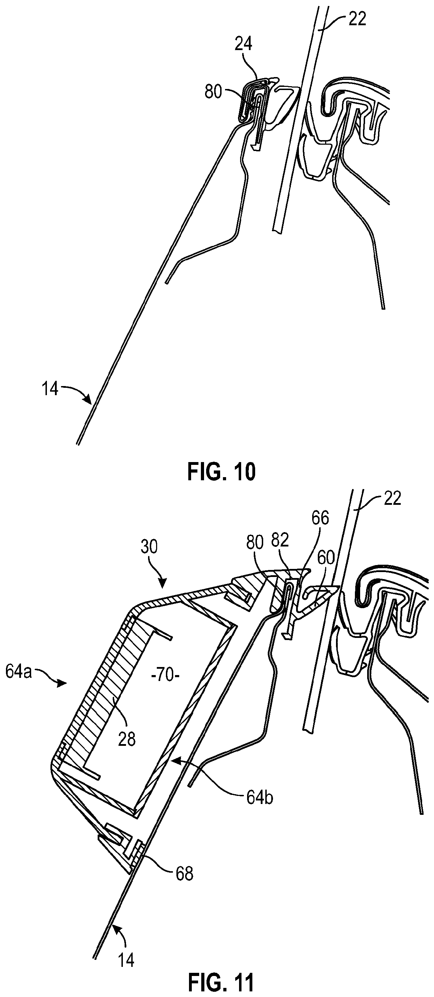

L'élément d'encadrement 30 peut recouvrir le lécheur 24 d'origine de la voiture 10 voire même le remplacer dans la mesure où l'élément 30 serait équipé d'un lécheur de substitution destiné à être monté à la place du lécheur d'origine (figures 10 et 11).

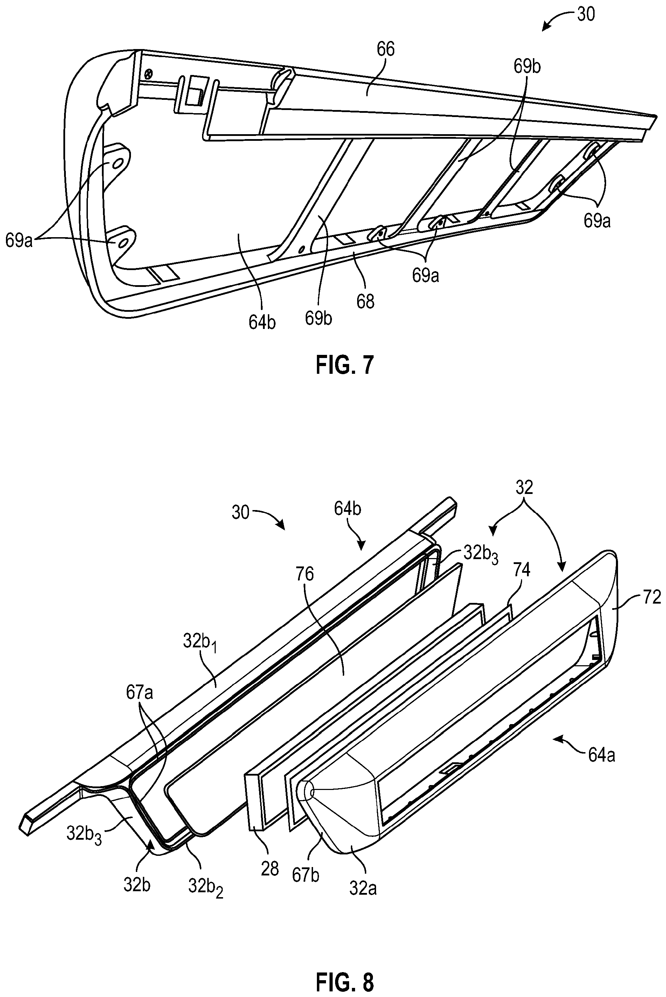

Les figures 6 et 7 montrent respectivement les faces externe visible 64a et interne non visible 64b de l'élément d'encadrement 30. La face externe 64a est visible par une personne extérieure au véhicule 10. La face interne 64b est destinée à être plaquée contre la porte 14 et éventuellement le lécheur 24 et comprend des moyens de fixation.

L'élément d'encadrement 30 comprend un écran 28 qui s'étend sur une majeure partie de la surface de la face externe 64a et qui est configuré pour afficher une ou plusieurs informations comme évoqué dans ce qui précède, telles que des logos ou des messages avec une police dont les caractères ont une hauteur supérieure ou égale à 1cm et par exemple comprise entre 2 et 6cm. L'élément d'encadrement 30 a par exemple une hauteur totale comprise entre 6 et 12cm. Plus la hauteur des caractères est importante et plus les informations sont visibles et lisibles à distance. Idéalement, ces informations sont lisibles à une distance du véhicule d'au moins 5 voire 10 mètres.

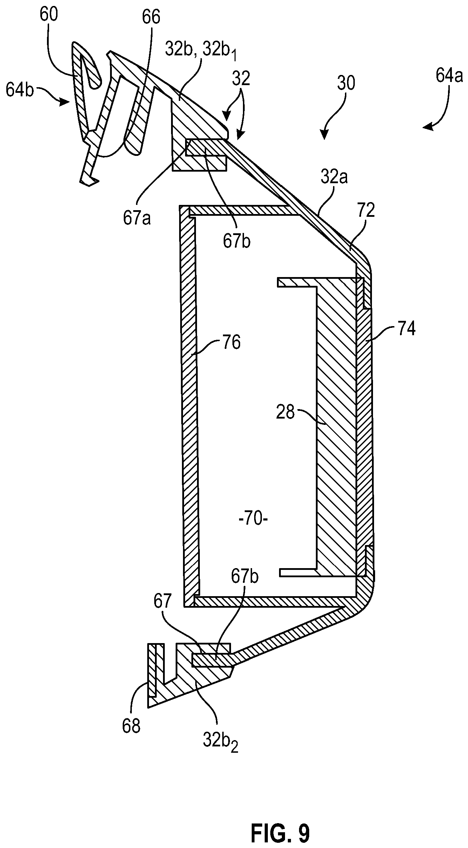

Les figures 8 et 9 montrent les différentes pièces de l'élément d'encadrement 30. L'élément 30 comprend un corps 32 qui peut être en deux parties, à savoir une partie standard 32a commune par exemple à plusieurs modèles de véhicules, et une partie d'adaptation 32b spécifique à un type de véhicule par exemple.

La partie standard 32a porte l'écran 28 et la partie d'adaptation 32b permet de fixer la partie standard 32a au véhicule 10. On comprend donc que la partie 32b est intercalée entre la partie 32a et le véhicule 10 et que la partie 32a comprend les moyens de fixation au véhicule.

Dans l'exemple représenté qui n'est pas limitatif, la partie 32b se présente sous la forme d'un cadre de forme générale parallélépipédique ou rectangulaire, creux ou non creux. La partie 32b comprend ainsi deux bords longitudinaux et horizontaux, respectivement supérieur 32b1 et inférieur 32b2, et deux bords latéraux 32b3. Le bord supérieur 32b1 se prolonge au-delà des bords latéraux 32b3 et a une longueur totale fonction de la longueur de la vitre 22 ou du lécheur 24 à recouvrir ou remplacer. Comme cela est visible aux figures 7 et 9, ce bord 32b1 peut être équipé, du côté de la face 64b, d'un crochet longitudinal 66 de fixation sur le bâti ou cadre de la porte 14 et d'une lèvre d'étanchéité coopérant avec la vitre 22 de la porte 14. Le bord inférieur 32b2 peut être équipé du côté de la face 64b d'un bande adhésive 68 destinée à être appliquée sur une face externe de la porte 14, située sous le lécheur 24. Enfin, si besoin, les bords 32b2 et 32b3 peuvent comprendre des orifices 69a de passage d'éléments de fixation du type vis ou analogue. Afin de renforcer la partie 32b, les bords 32b1, 32b2 peuvent être reliés par des jambes 69b de renfort parallèles aux bords 32b3, comme cela est visible à la figure 7.

La partie d'adaptation 32b comprend enfin, du côté de la face visible 64a, une rainure périphérique 67a de montage d'un bord périphérique 67b de la partie standard 32a. Les parties 32a, 32b peuvent être solidarisées ensemble par collage ou soudage par exemple, au niveau de l'emboîtement du bord 67b dans la rainure 67a.

La partie standard 32a comprend un logement 70, de préférence étanche, qui a une forme générale allongée le long de l'élément 30 et qui renferme l'écran 28 voire également le système de commande et de communication 34.

La partie standard 32a comprend trois portions 72, 74, 76 dans l'exemple représenté sachant qu'au moins certaines de ces portions pourraient être formées d'une seule pièce, c'est-à-dire simultanément, par injection bi-matière par exemple, ou intégrées pour certaines d'entre elles avec la partie 32b.

La partie 32a comprend une première portion 72 qui se présente sous la forme d'un cadre de forme générale parallélépipédique ou rectangulaire. La deuxième portion 74 se présente sous la forme d'une paroi transparente ou translucide qui est disposée sur la portion 72, du côté de la face visible 64a, et qui ferme un côté (externe) du logement 70 précité. Cette portion 72 recouvre l'écran 28 qui peut être directement appliqué et fixé, par exemple par collage, sur une face de la paroi. Les portions 72, 74 peuvent être réalisées indépendamment l'une de l'autre et fixées ensemble par collage par exemple. En variante, elles pourraient être réalisées simultanément par injection bi-matière ou surmoulage.

En variante, les parties d'adaptation 32b et standard 32a seraient formées d'une seule pièce ou seraient reliées l'une à l'autre autrement que par emboîtement et par exemple par une charnière. Encore en variante, la portion 74 pourrait faire partie de la pièce d'adaptation 32b plutôt que de la pièce standard 32a. Cette portion 74 pourrait également être reliée par une charnière au reste du corps.

La dernière portion 76 se présente sous la forme d'une paroi qui est disposée sur la portion 72, du côté de la face 64b, et qui ferme l'autre côté (interne) du logement 70 précité. Cette portion 76 ou paroi peut être fixée sur la portion 72 par collage par exemple.

Les figures 10 et 11 montrent un exemple particulier de montage de cet élément d'encadrement 30 sur la porte 14 du véhicule 10. Le lécheur 24 d'origine est retiré ce qui permet de laisser libre la feuillure horizontale extérieure 80 du bâti de la porte 14. Le crochet 66 de l'élément 30 comprend une gorge longitudinale 82 dans laquelle est engagée la feuillure 80. L'élément 30 est monté sur la porte 14 en présentant d'abord sont bord supérieur au niveau de la feuillure 80, et en engageant cette feuillure 80 dans la gorge 82. La lèvre 60 prend alors appui sur la vitre 22 de la porte 14. Le bord inférieur de l'élément 30 est ensuite rabattu sur la porte 14 et appliqué contre celle-ci de façon à ce que la bande adhésive 68 adhère contre la porte 14. Le démontage de l'élément 30 peut être réalisé en reproduisant ces étapes dans l'ordre inverse et en remettant le lécheur 24 d'origine sur la porte 14.

Dans le cas où le système 34 serait intégré à l'élément 30, ce système pourrait être monté dans le logement 70. En variante, le système 34 serait situé ailleurs dans le véhicule 10 et serait relié à l'écran 28 par exemple par une nappe de conducteurs qui sortirait du logement 70 du côté de la face 64b pour être acheminée jusqu'au système 34 en passant à travers le bâti de la porte 14.

L'élément d'encadrement 30 selon l'invention est de préférence alimenté par une batterie électrique, qui peut être la batterie du véhicule ou bien une batterie autonome et par exemple une batterie embarquée dans l'élément 30. Dans la dernière variante représentée aux figures 5 et suivantes, cette batterie serait par exemple située dans le logement 70. Dans le cas où ce logement 70 comprendrait le système 34 et la batterie, cet élément 30 serait autonome et une liaison à un composant du véhicule pourrait juste s'avérer utile pour recharger cette batterie sauf à ce que l'élément soit équipé d'un panneau solaire ou analogue pour assurer ce rechargement.

## Revendications

1. Elément (30) d'encadrement de vitre pour un véhicule (10), en particulier automobile, cet élément d'encadrement étant sensiblement horizontal et configuré pour s'étendre, à l'extérieur du véhicule, le long d'un bord sensiblement horizontal d'une vitre (20, 22) et dans le prolongement de cette vitre, cet élément comportant un corps (32) configuré pour être porté par un support du véhicule, l'élément comprenant en outre au moins un écran (28) d'affichage d'information à pixels et un système (34) de commande et de communication, qui est configuré pour communiquer à distance, c'est à dire sans fil, et pour recevoir des premiers signaux (36) et pour transmettre des seconds signaux (38) audit au moins un écran (28), cet écran étant configuré pour afficher des informations en fonction desdits seconds signaux, **caractérisé en ce que** ledit corps (32) comprend une partie standard (32a) portant ledit écran (28) et une partie d'adaptation (32b) configurée pour être intercalée entre la partie standard (32a) et le véhicule (10) et pour permettre la fixation du corps au véhicule.

2. Elément d'encadrement (30) selon la revendication 1, dans lequel l'élément d'encadrement (30) comporte un enjoliveur de finition d'une vitre latérale (22), du pare-brise ou d'une vitre arrière d'un véhicule (10).

3. Elément d'encadrement (30) selon la revendication 1, dans lequel l'élément d'encadrement (30) comporte un joint ou un lécheur extérieur (24) d'une vitre latérale (22) du pare-brise ou d'une vitre arrière d'un véhicule (10).

4. Elément d'encadrement (30) selon l'une des revendications 1 à 3, dans lequel ledit système (34) est configuré pour communiquer avec au moins un dispositif choisi parmi un téléphone portable (40) ou une application (42) installée sur un téléphone portable, un capteur (44), une clef (46), un bus de données du véhicule, un réseau de communication mobile, WIFI, un radio signal, Bluetooth, local ou relié à l'internet, et un objet communicant en champ proche (NFC).

5. Elément d'encadrement (30) selon la revendication 4, dans lequel ledit capteur (44) est un capteur de verrouillage/déverrouillage de porte, un capteur d'ouverture/fermeture de porte, un capteur d'ouverture/fermeture de vitre, un capteur de température, un capteur de bruit ou de voix, un capteur d'image ou de vidéo, un capteur de position géographique, un capteur de proximité, un radar, un lidar, un capteur d'empreinte digitale, de reconnaissance faciale ou de reconnaissance de silhouette ou de démarche à distance, ou un capteur solaire ou un matériau thermoélectrique par exemple noir permettant de générer du courant.

6. Elément d'encadrement (30) selon l'une des revendications précédentes, dans lequel ledit au moins un écran (28) est au moins en partie tactile et/ou ledit élément d'encadrement comprend au moins une surface tactile ou une interface haptique, radar ou vidéo, reconnaissant et interprétant des gestes à distance.

7. Elément d'encadrement (30) selon l'une des revendications précédentes, dans lequel ledit au moins écran (28) est configuré pour afficher une information choisie parmi une indication d'ouverture et/ou de fermeture de porte du véhicule, un indicateur d'un niveau de charge d'une batterie en particulier du véhicule, une pression de pneumatique(s) du véhicule, un numéro d'immatriculation en particulier du véhicule, un message et/ou une image que l'utilisateur aura choisi d'afficher sur ledit écran à partir d'un dispositif électronique qui y serait connecté en particulier son téléphone portable ou smartphone, une information relative à la qualité de l'air intérieur du véhicule ou de l'air extérieur, un SMS de communication ou d'alerte, une information sous forme de texte, d'images ou de code couleur représentant des émissions de polluants, des recommandations ou des rejets de gaz du véhicule, une information sur une action d'entretien préventif ou urgente à réaliser sur le véhicule (pneus dégonflés, niveau d'huile à refaire, niveau de lave glace, niveau d'eau de refroidissement, niveau d'AdBlue, usure des plaquettes/disques de frein, entretien technique faisable sur parking, ou contrôles et entretiens à programmer ou programmés à une date particulière), une information sur l'état de la carrosserie du véhicule dans le cadre d'une location ou d'un partage du véhicule, l'accessibilité du véhicule à des personnes à mobilité réduite, une information sur une distance entre ledit véhicule et les véhicules stationnés de chaque côté dudit véhicule, notamment pour les PMR nécessitant de l'espace, une information réglementaire résultant d'un péage, ou d'un droit d'accès ou d'une activation par les forces de l'ordre, un décompte du temps de stationnement restant en particulier dans le cadre du paiement de ce stationnement, une information codée permettant d'autoriser l'accès à certaines zones par une interrogation ou validation visuelle d'un dispositif extérieur, et une couleur, un signe ou un logo dont la reconnaissance déclenche la validation d'un contrôle d'accès.

8. Elément d'encadrement (30) selon l'une des revendications précédentes, dans lequel ledit corps (32) et ledit au moins un écran (28) sont recouverts d'une couche (52) au moins en partie transparente pour visualiser l'information affichée à travers cette couche.

9. Elément d'encadrement (30) selon la revendication précédente, dans lequel ladite couche (52) comprend au moins une partie opaque (54) recouvrant ledit corps et au moins une partie transparente (56) ou semi transparente recouvrant ledit au moins un écran, ladite couche (52) comprenant de préférence une face située du côté dudit au moins un écran (28), qui comprend au moins une zone comportant un revêtement, de préférence noir, pour former ladite au moins une partie opaque (54) de préférence brillante, et au moins une zone ne comportant pas un tel revêtement, pour former ladite partie transparente (56) et pouvant, par sa transparence et sa coloration propre associée à un écran noir placé derrière cette surface, donner le même aspect de préférence noir brillant que la zone opaque.

10. Elément d'encadrement (30) selon l'une des revendications précédentes, dans lequel il comprend au moins un enjoliveur (26) définissant une surface extérieure esthétique et visible par un utilisateur dudit véhicule, cet enjoliveur pouvant être constitué d'un bandeau ou d'un film rapporté d'aspect métallique ou autre, différent des zones de préférence noires de la revendication 9, ou d'un bandeau lumineux émis par l'écran.

11. Elément d'encadrement (30) selon l'une des revendications précédentes, dans lequel il comprend au moins une caméra, et/ou au moins un radar, et/ou au moins un haut-parleur, et/ou au moins un projecteur, et/ou au moins un capteur de proximité, et/ou au moins un lidar, et/ou au moins un actionneur, et/ou au moins un capteur solaire ou thermoélectrique permettant de générer ou de récupérer de l'électricité, et/ou au moins une batterie permettant de stocker et de restituer de l'électricité.

12. Elément d'encadrement (30) selon l'une des revendications précédentes, dans lequel ledit corps (32) est au moins en partie élastiquement déformable ou comprend une partie élastiquement déformable, et est configuré pour coopérer à étanchéité avec un organe, tel qu'une vitre.

13. Elément d'encadrement (30) selon l'une des revendications précédentes, dans lequel ledit système (34) est fixé sur ou dans ledit corps (32) et est relié audit au moins un écran, par exemple par une liaison filaire.

14. Elément d'encadrement (30) selon l'une des revendications 1 à 12, dans lequel ledit système (34) est à distance dudit corps (32) et est relié audit au moins un écran, par exemple par une liaison filaire ou sans fil.

15. Elément d'encadrement (30) selon l'une des revendications précédentes, dans lequel il comprend des moyens de fixation amovible, tels qu'au moins un crochet (68) ou au moins une bande adhésive (68), sur une porte du véhicule.

16. Elément d'encadrement (30) selon l'une des revendications précédentes,
dans lequel la partie d'adaptation (32b) a une forme de cadre et comprend un bord supérieur (32b1) qui s'étend sur au moins un côté au-delà dudit cadre.

17. Elément d'encadrement (30) selon l'une des revendications précédentes, dans lequel le corps (32) comprend un logement (70) étanche de montage dudit écran (28) voire également dudit système (34).

18. Véhicule, en particulier automobile, comportant au moins un élément d'encadrement (30) selon l'une des revendications précédentes, cet élément d'encadrement étant situé à l'extérieur du véhicule.

19. Véhicule selon la revendication précédente, dans lequel l'élément d'encadrement s'étend sur plus de 80% de la longueur dudit bord de la vitre, et de préférence sur toute la longueur de ce bord.

20. Véhicule selon la revendication 18 ou 19, comportant au moins deux éléments d'encadrement (30) selon l'une des revendications 1 à 18, qui s'étendent l'un derrière l'autre le long d'un côté du véhicule et respectivement le long des bords de deux vitres adjacentes.

21. Véhicule selon l'une des revendications 18 à 20, dans lequel ledit au moins un élément d'encadrement est situé sur un côté, à l'arrière ou à l'avant du véhicule.

## Patentansprüche

1. Rahmenelement (30) einer Scheibe für ein Fahrzeug (10), insbesondere ein Automobil, wobei dieses Rahmenelement im Wesentlichen horizontal vorliegt und konfiguriert ist, um sich an der Außenseite des Fahrzeugs entlang einer im Wesentlichen horizontalen Kante einer Scheibe (20, 22) und in der Verlängerung dieser Scheibe zu erstrecken, wobei dieses Element einen Körper (32) umfasst, der konfiguriert ist, um von einem Träger des Fahrzeugs getragen zu werden, wobei das Element weiter mindestens einen Bildschirm (28) zur Anzeige von Informationen mit Pixeln und ein System (34) zur Steuerung und Kommunikation umfasst, das zur Fernkommunikation, das heißt drahtlos, und zum Empfangen erster Signale (36) und zum Übertragen zweiter Signale (38) an diesen mindestens einen Bildschirm (28) konfiguriert ist, wobei dieser Bildschirm konfiguriert ist, um Informationen in Funktion der zweiten Signale anzuzeigen, **dadurch gekennzeichnet, dass** der Körper (32) ein Standardteil (32a), das den Bildschirm (28) trägt, und ein Anpassungsteil (32b) umfasst, das konfiguriert ist, um zwischen dem Standardteil (32a) und dem Fahrzeug (10) eingefügt zu werden und um die Befestigung des Körpers an dem Fahrzeug zu erlauben.

2. Rahmenelement (30) nach Anspruch 1, wobei das Rahmenelement (30) eine Zierleiste einer Seitenscheibe (22), der Windschutzscheibe oder einer Heckscheibe eines Fahrzeugs (10) umfasst.

3. Rahmenelement (30) nach Anspruch 1, wobei das Rahmenelement (30) eine Dichtung oder einen äußeren Abstreifer (24) einer Seitenscheibe (22) der Windschutzscheibe oder einer Heckscheibe eines Fahrzeugs (10) umfasst.

4. Rahmenelement (30) nach einem der Ansprüche 1 bis 3, wobei das System (34) konfiguriert ist zum Kommunizieren mit mindestens einer Vorrichtung, ausgewählt aus einem tragbaren Telefon (40) oder einer auf einem Mobiltelefon installierten Anwendung (42), einem Sensor (44), einem Schlüssel (46), einem Datenbus des Fahrzeugs, einem Mobilkommunikationsnetz, WIFI, einem Radiosignal, Bluetooth, lokal oder mit dem Internet verbunden, und einem im Nahfeld kommunizierenden Objekt (NFC-Objekt).

5. Rahmenelement (30) nach Anspruch 4, wobei der Sensor (44) ein Verriegelungs-/Entriegelungssensor einer Tür, ein Öffnungs-/Verschlusssensor einer Tür, ein Öffnungs-/Verschlusssensor einer Scheibe, ein Temperatursensor, ein Geräusch- oder Stimmensensor, ein Bild- oder Videosensor, ein Geopositionssensor, ein Näherungssensor, ein Radar, ein Lidar, ein Sensor für digitalen Fingerabdruck, zur Gesichtserkennung oder zur Erkennung einer Silhouette oder ein Fernvorgehen, oder ein Sonnensensor oder ein thermoelektrisches Material, zum Beispiel schwarz, ist, das erlaubt, Strom zu erzeugen.

6. Rahmenelement (30) nach einem der vorstehenden Ansprüche, wobei der mindestens eine Bildschirm (28) mindestens zum Teil taktil ist und/oder das Rahmenelement mindestens eine taktile Oberfläche oder eine haptische Schnittstelle, Radar oder Video umfasst, die Gesten aus der Ferne erkennt und interpretiert.

7. Rahmenelement (30) nach einem der vorstehenden Ansprüche, wobei der mindestens eine Bildschirm (28) konfiguriert ist zum Anzeigen von Informationen, ausgewählt aus einer Öffnungs- und/oder Verschlussangabe der Fahrzeugtür, einem Indikator eines Füllstands einer Batterie, insbesondere des Fahrzeugs, einem oder mehreren Reifendrücken des Fahrzeugs, einer Immatrikulationsnummer, insbesondere des Fahrzeugs, einer Mitteilung und/oder einem Bild, die/das der Benutzer ausgewählt hat, um auf dem Bildschirm ausgehend von einer elektronischen Vorrichtung anzuzeigen, die damit verbunden ist, insbesondere seinem Mobiltelefon oder Smartphone, Informationen in Bezug auf die Luftqualität im Inneren des Fahrzeugs oder der Außenluft, einer Kommunikations- oder Warn-SMS, Informationen in Form von Text, von Bildern oder von Farbcode, die Emissionen von Schadstoffen, Empfehlungen oder Gasausstöße des Fahrzeugs darstellen, Informationen über eine vorbeugende oder dringende Unterhaltsmaßnahme, die an dem Fahrzeug auszuführen ist (platte Reifen, Ölstand neu einzustellen, Füllstand der Scheibenwaschflüssigkeit, Füllstand des Kühlwassers, Füllstand von AdBlue, Verschleiß von Bremsbelägen/-scheiben, auf dem Parkplatz machbarer technischer Unterhalt oder zu programmierende oder zu einem besonderen Datum programmierte Kontrollen und Unterhalte), Informationen zum Zustand der Karosserie des Fahrzeugs im Rahmen eines Mietverhältnisses oder einer gemeinsamen Nutzung des Fahrzeugs, der Zugänglichkeit des Fahrzeugs für Personen mit eingeschränkter Mobilität, Informationen über den Abstand zwischen dem Fahrzeug und auf jeder Seite des Fahrzeugs abgestellten Fahrzeugen, insbesondere für PMR, die Raum benötigen, reglementierende Informationen, die aus einer Maut resultieren, oder eines Zugangsrechts oder einer Aktivierung durch die Ordnungskräfte, einer Parkzeitabrechnung, die insbesondere im Rahmen der Zahlung dieses Parkens bleibt, codierten Informationen, die durch eine visuelle Abfrage oder Validierung einer äußeren Vorrichtung Zugang zu gewissen Zonen gewähren, und einer Farbe, einem Zeichen oder einem Logo, von dem die Erkennung die Validierung einer Zugangskontrolle auslöst.

8. Rahmenelement (30) nach einem der vorstehenden Ansprüche, wobei der Körper (32) und der mindestens eine Bildschirm (28) mit einer Schicht (52) bedeckt sind, die mindestens zum Teil transparent ist, um die angezeigten Informationen durch diese Schicht hindurch zu visualisieren.

9. Rahmenelement (30) nach dem vorstehenden Anspruch, wobei die Schicht (52) mindestens einen opaken Teil (54), der den Körper bedeckt, und mindestens einen transparenten oder halbtransparenten Teil (56) umfasst, der den Bildschirm bedeckt, wobei die Schicht (52) vorzugsweise eine Fläche umfasst, die sich an der Seite des mindestens einen Bildschirms (28) befindet, die mindestens eine Zone umfasst, die eine Beschichtung, vorzugsweise schwarz, umfasst, um den mindestens einen opaken Teil (54), vorzugsweise glänzend, zu bilden, und mindestens eine Zone umfasst, die keine solche Beschichtung umfasst, um den transparenten Teil (56) zu bilden und aufgrund seiner Transparenz und seiner eigenen Färbung, die mit einem schwarzen, hinter dieser Oberfläche platzierten Bildschirm assoziiert ist, das gleiche Erscheinungsbild, vorzugsweise schwarz glänzend, wie die opake Zone ergeben kann.

10. Rahmenelement (30) nach einem der vorstehenden Ansprüche, wobei es mindestens eine Zierblende (26), die eine äußere ästhetische und von einem Benutzer des Fahrzeugs einsehbare Oberfläche definiert, wobei diese Zierblende aus einem Band oder einer Folie bestehen kann, das/die ein metallisches oder anderes Erscheinungsbild mit sich bringt, das sich von den vorzugsweise schwarzen Zonen von Anspruch 9 unterscheidet, oder ein von dem Bildschirm emittiertes Leuchtband umfasst.

11. Rahmenelement (30) nach einem der vorstehenden Ansprüche, wobei es mindestens eine Kamera und/oder mindestens ein Radar und/oder mindestens einen Lautsprecher und/oder mindestens einen Projektor und/oder mindestens einen Näherungssensor und/oder mindestens ein Lidar und/oder mindestens eine Betätigungsvorrichtung und/oder mindestens einen Sonnen- oder thermoelektrischen Sensor, der erlaubt, Elektrizität zu erzeugen oder zurückzugewinnen, und/oder mindestens eine Batterie umfasst, die erlaubt, Elektrizität zu speichern und zurückzugeben.

12. Rahmenelement (30) nach einem der vorstehenden Ansprüche, wobei der Körper (32) mindestens zum Teil elastisch verformbar ist oder ein elastisch verformbares Teil umfasst, und konfiguriert ist, um bei der Abdichtung mit einem Bauelement, wie einer Scheibe, zusammenzuwirken.

13. Rahmenelement (30) nach einem der vorstehenden Ansprüche, wobei das System (34) auf oder in dem Körper (32) befestigt ist und mit dem mindestens einen Bildschirm verbunden ist, zum Beispiel durch eine Drahtverbindung.

14. Rahmenelement (30) nach einem der Ansprüche 1 bis 12, wobei das System (34) in einem Abstand von dem Körper (32) vorliegt und mit dem mindestens einen Bildschirm verbunden ist, zum Beispiel durch eine Drahtverbindung oder drahtlos.

15. Rahmenelement (30) nach einem der vorstehenden Ansprüche, wobei es an einer Tür des Fahrzeugs ablösbare Befestigungsmittel umfasst, wie mindestens einen Haken (68) oder mindestens einen Klebestreifen (68).

16. Rahmenelement (30) nach einem der vorstehenden Ansprüche,
wobei das Anpassungsteil (32b) eine Rahmenform aufweist und eine obere Kante (32b1) umfasst, die sich auf mindestens einer Seite jenseits des Rahmens erstreckt.

17. Rahmenelement (30) nach einem der vorstehenden Ansprüche, wobei der Körper (32) eine dichte Aufnahme (70) zur Montage des Bildschirms (28) oder auch des Systems (34) umfasst.

18. Fahrzeug, insbesondere Automobil, umfassend mindestens ein Rahmenelement (30) nach einem der vorstehenden Ansprüche, wobei dieses Rahmenelement sich an der Außenseite des Fahrzeugs befindet.

19. Fahrzeug nach dem vorstehenden Anspruch, wobei sich das Rahmenelement über mehr als 80 % der Länge der Kante der Scheibe und vorzugsweise über die ganze Länge dieser Kante erstreckt.

20. Fahrzeug nach Anspruch 18 oder 19, umfassend mindestens zwei Rahmenelemente (30) nach einem der Ansprüche 1 bis 18, die sich eins hinter dem anderen entlang einer Seite des Fahrzeugs und jeweils entlang der Kanten von zwei benachbarten Scheiben erstrecken.

21. Fahrzeug nach einem der Ansprüche 18 bis 20, wobei das mindestens eine Rahmenelement sich auf einer Seite, an der Hinterseite oder an der Vorderseite des Fahrzeugs befindet.

## Claims

1. A window frame element (30) for a vehicle (10), in particular a motor vehicle, said frame element being substantially horizontal and configured to extend, to the exterior of the vehicle, along a substantially horizontal edge of a window (20, 22) and in the extension of this window, this element comprising a body (32) configured to be carried by a support of the vehicle, the element comprising at least one pixel information display screen (28) and a control and communication system (34), which is configured to communicate remotely, i.e. wirelessly, and to receive first signals (36) and to transmit second signals (38) to said at least one screen (28), said screen being configured to display information in accordance with said second signals, **characterized in that** said body (32) comprises a standard portion (32a) carrying said screen (28) and a fitting portion (32b) configured to be interposed between the standard portion (32a) and the vehicle (10) and to allow the attachment of the body to the vehicle.

2. The frame element (30) of claim 1, wherein the frame element (30) comprises a finishing trim element of a side window (22), a windshield or a rear window of a vehicle (10).

3. The frame element (30) of claim 1, wherein the frame element (30) comprises an outer seal or licker (24) of a side window (22) of the windshield or a rear window of a vehicle (10).

4. The frame element (30) of any one of claims 1 to 3, wherein said system (34) is configured to communicate with at least one device selected from a cell phone (40) or an application (42) installed on a cell phone, a sensor (44), a key (46), a data bus of the vehicle, a mobile communication network, WIFI, a radio signal, Bluetooth, local or internet connected, and a near field communicating object (NFC).

5. The frame element (30) of claim 4, wherein said sensor (44) is a door locking/unlocking sensor, a door opening/closing sensor, a window opening/closing sensor, a temperature sensor, a noise or voice sensor, an image or video sensor, a geographical position sensor, a proximity sensor, a radar, a lidar, a fingerprint, facial recognition or remote silhouette or gait recognition sensor, or a solar sensor or a thermoelectric material, e.g. black, allowing to generate current.

6. The frame element (30) according to any of the preceding claims, wherein said at least one screen (28) is at least partly tactile and/or said frame element comprises at least one tactile surface or a haptic, radar or video interface, recognizing and interpreting remote gestures.

7. The frame element (30) according to one of the preceding claims, wherein said at least one screen (28) is configured to display an information selected from among an indication of opening and/or closing of door of the vehicle, an indicator of a charge level of a battery, in particular of the vehicle, a pressure of the tire or tires of the vehicle, a registration number, in particular of the vehicle, a message and/or an image that the user has chosen to display on said screen from an electronic device connected thereto, in particular his cell phone or smartphone, an information relative to the quality of the air inside the vehicle or the air outside, a communication or alert SMS, an information in the form of text, images or colour code representing pollutant emissions, recommendations or gas discharges from the vehicle, an information on a preventive or urgent maintenance action to be carried out on the vehicle (deflated tires, oil level to be redone, washer level, cooling water level, AdBlue level, wear of the brake pads/discs, technical maintenance feasible on the parking, or controls and maintenance scheduled or to be scheduled on a particular date), an information on the condition of the bodywork of the vehicle in the context of a rental or a sharing of the vehicle, the accessibility of the vehicle to persons with reduced mobility, an information on the distance between said vehicle and the vehicles parked on either side of said vehicle, in particular for the PRM requiring space, a regulatory information resulting from a toll, or an access right or an activation by the police, a countdown of the remaining parking time in particular within the context of the payment for this parking, a coded information allowing to authorize the access to certain areas by an interrogation or visual validation of an outer device, and a colour, a sign or a logo whose recognition triggers the validation of an access control.

8. The frame element (30) according to any of the preceding claims, wherein said at least one screen (28) has a display surface area greater than 1cm², and preferably greater than 10cm², and/or a resolution or definition greater than or equal to 50 dpi.

9. The frame element (30) according to the preceding claim, wherein said layer (52) comprises at least one opaque portion (54) covering said body and at least one transparent or semi-transparent portion (56) covering said at least one screen, said layer (52) preferably comprising a face located on the side of said at least one screen (28), which comprises at least one area comprising a coating, preferably black, to form said at least one preferably shiny opaque portion (54), and at least one area not comprising such a coating, to form said transparent portion (56) and adapted to, by its transparency and its own coloration associated with a black screen placed behind this surface, give the same preferably shiny black appearance as the opaque area.

10. The frame element (30) according to one of the preceding claims, wherein it comprises at least one trim element (26) defining an aesthetic outer surface and visible by a user of said vehicle, this trim element being able to be constituted by a band or a fitted film of metal or other appearance, different from the preferably black areas of claim 9, or of a light band emitted by the screen.

11. The frame element (30) according to any of the preceding claims, wherein it comprises at least one camera, and/or at least one radar, and/or at least one loudspeaker, and/or at least one projector, and/or at least one proximity sensor, and/or at least one lidar, and/or at least one actuator, and/or at least one solar or thermoelectric sensor allowing for generating or recovering electricity, and/or at least one battery allowing for storing and restoring electricity.

12. The frame element (30) according to any of the preceding claims, wherein said body (32) is at least partly elastically deformable or comprises an elastically deformable portion, and is configured to sealingly cooperate with a member, such as a window.

13. The frame element (30) according to any of the preceding claims, wherein said system (34) is attached on or in said body (32) and is connected to said at least one screen, for example by a wire connection.

14. The frame element (30) according to any of claims 1 to 12, wherein said system (34) is remote from said body (32) and is connected to said at least one screen, for example by a wired or wireless connection.

15. The frame element (30) according to any of the preceding claims, wherein it comprises removable attachment means, such as at least one hook (68) or at least one adhesive strip (68), to a door of the vehicle.

16. The frame element (30) according to any of the preceding claims, wherein the fitting portion (32b) has a frame shape and comprises an upper edge (32b1) that extends on at least one side beyond said frame.

17. The frame element (30) according to any of the preceding claims, wherein the body (32) comprises a sealed housing (70) for mounting said screen (28) or also said system (34).

18. A vehicle, in particular for a motor vehicle, comprising at least one frame element (30) according to one of the preceding claims, this frame element being located to the exterior of the vehicle.

19. The vehicle of the preceding claim, wherein the frame element extends over more than 80% of the length of said edge of the window, and preferably over the entire length of this edge.

20. The vehicle according to claim 18 or 19, comprising at least two frame elements (30) according to one of claims 1 to 18, which extend one behind the other along one side of the vehicle and respectively along the edges of two adjacent windows.

21. The vehicle of any of claims 18 to 20, wherein said at least one frame element is located on a side, rear or front of the vehicle.
